Europäisches Patentamt

European Patent Office

Office européen des brevets

(11) Veröffentlichungsnummer: **0 069 114**
**A2**

## (12) EUROPÄISCHE PATENTANMELDUNG

(21) Anmeldenummer: 82890091.0

(22) Anmeldetag: 21.06.82

(51) Int. Cl.³: **G 01 W 1/14**

(30) Priorität: 25.06.81 AT 2815/81

(43) Veröffentlichungstag der Anmeldung: **05.01.83**
**Patentblatt 83/1**

(84) Benannte Vertragsstaaten: **CH DE FR IT LI**

(71) Anmelder: **Haidinger, Josef, Wiener Strasse 83,**
**A-4020 Linz (AT)**

(72) Erfinder: **Haidinger, Josef, Wiener Strasse 83,**
**A-4020 Linz (AT)**

(54) **Selbstregistrierendes Niederschlagmessgerät.**

(57) Die Erfindung betrifft ein selbstregistrierendes Niederschlagsmessgerät, dessen Funktion wie folgt abläuft:

Der in den Auffangtrichter fallende Niederschlag läuft durch ein Ablussrohr in das Sammelgefäss. Der in diesem angeordnete Schwimmer überträgt den gefallenen Niederschlag mittels Seil und Gegengewicht und der Übertragungseinrichtung.

An der im Lagerbock befindlichen Welle sind ein Seilrad und eine Archimedische Kurvenscheibe befestigt. Der Führungsstift, der an dieser Kurvenscheibe anliegt, ist durch einen zweiarmigen Hebel über eine Lagerung mit jenem Arm verbunden, der den Schreibstift trägt. Die Stellung des Schreibstiftes entspricht der Lage des Schwimmers und somit der Drehstellung der Kurvenscheibe. Der Schreibstift zeichnet den jeweils gefallenen Niederschlag auf dem Schreibstreifen am Uhrwerk auf. Zur genauen Einstellung befinden sich am Hebelarmsystem Justiermöglichkeiten.

Zur Messung des in fester Form fallenden Niederschlages wird in den Auffangtrichter bis zum Überlauf beim Standrohr ein bestimmtes Frostschutzmittel eingefüllt.

Josef Haidinger
Wiener Straße 83
4020 Linz

-1-

Selbstregistrierendes
Niederschlagsmeßgerät


PATENTBESCHREIBUNG
für ein selbstregistrierendes Niederschlagsmeßgerät


Die Erfindung betrifft ein selbstregistrierendes Niederschlagsmeßgerät mit einem Sammelgefäß für den Niederschlag, einem im Sammelgefäß angeordneten Schwimmer und einer Übertragungseinrichtung,
mittels derer die Lage des Schwimmers im Sammelgefäß auf einen
Schreiber übertragbar ist. Derartige Geräte sind z.B. aus der
AT-PS 324 734 bekannt.

Die dem derzeitigen Stand der Technik auf dem Gebiet der selbstregistrierenden Niederschlagsmessung entsprechenden Meßgeräten beruhen auf den Prinzipien des Hebergefäßes, der Wippe oder des Tropfenzählers. Häufig verwendet, jedoch im Winterbetrieb besonders gefährdet sind Geräte, die auf dem Prinzip des Hebergefäßes beruhen. Ein
Nachteil dieser Geräte liegt auch darin, daß auf Grund der erforderlichen Zeit für die Abheberung je nach Intensität des Niederschlages
mit großen Fehlern behaftete Aufzeichnungen vorliegen.

Das neue Gerät soll die Selbstregistrierung des Niederschlags ohne
den durch den Abheberungsvorgang eingetragenen Fehler ermöglichen.
Dies wird erfindungsgemäß dadurch erreicht, daß die Übertragungseinrichtung eine Kurvenscheibe aufweist, deren Drehstellung der Lage
des Schwimmers im Sammelgefäß entspricht und die wenigstens stückweise nach einer Spirale geformt ist, wobei an der Kurvenscheibe ein
Arm eines schwenkbar gelagerten zweiarmigen Hebels anliegt, dessen
anderer Arm den Schreibstift des Schreibers trägt.

Ein vorteilhaftes Ausführungsbeispiel der Erfindung wird im Folgenden an Hand der Zeichnung näher erläutert. Es zeigen:

/2

Fig. 1 ein erfindungsgemäßes Niederschlagsmeßgerät

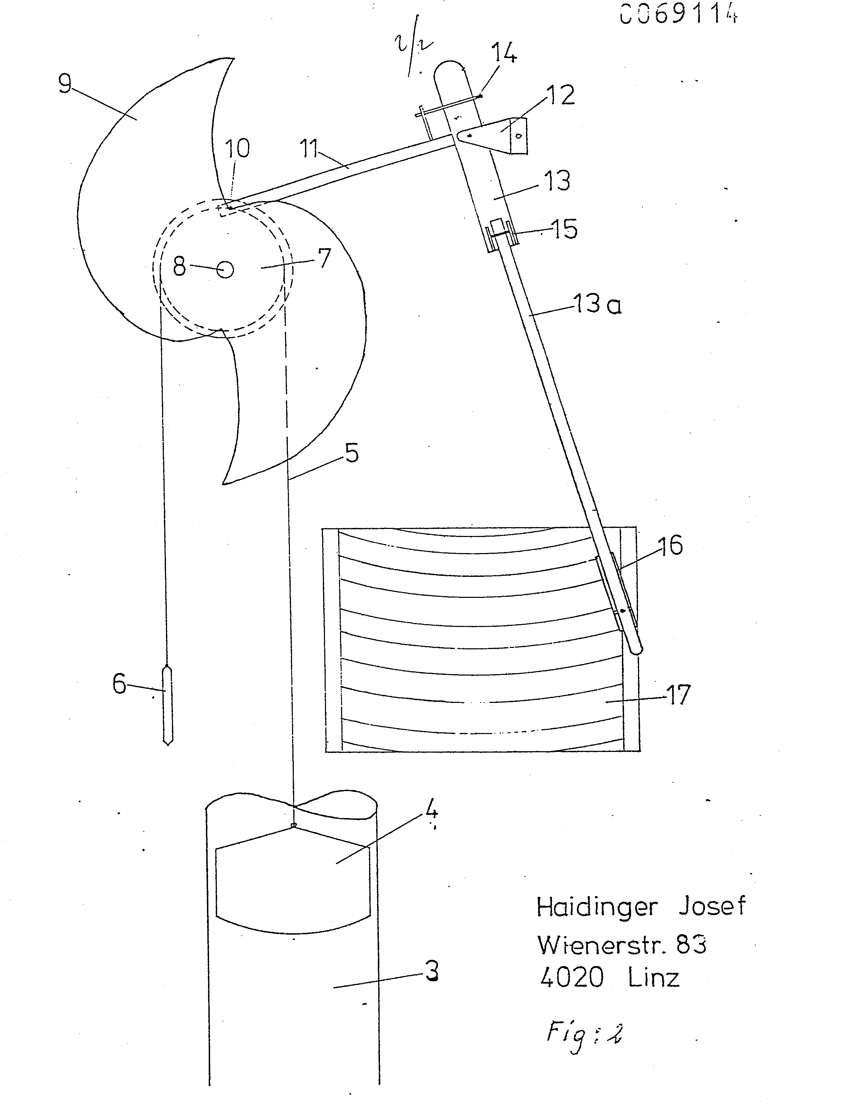

Fig. 2 ein Detail aus Figur 1 in vergrößerter Darstellung.

Der Niederschlag fällt in einen Auffangtrichter (1) und gelangt über eine Ablaufleitung (2) in ein Sammelgefäß (3). Der im Sammelgefäß befindliche Schwimmer (4) überträgt die den gefallenen Niederschlag entsprechenden Füllhöhen über ein Schwimmerseil (5) mit Gegengewicht (6). Durch die Bewegung des Schwimmerseiles wird ein mit einem Seilrad (7) versehene Welle (8) in drehende Bewegung versetzt. Auf dieser Welle ist eine Kurvenscheibe (9) angebracht, die derart geformt ist, daß sie die durch den Schwimmeranstieg im Sammelgefäß hervorgerufene Drehbewegung mittels des einen Armes (11) eines schwenkbar gelagerten zweiarmigen Hebels in eine dem gefallenen Niederschlag entsprechende Drehbewegung des anderen Armes (13, 13a) überträgt. Mathematisch gesehen entspricht die Form der Kurvenscheibe einer archimedischen Spirale. Durch die Bewegung der Kurvenscheibe (9) wird über einen Führungsstift (10) der in einem Lagerbock (12) gelagerte zweiarmige Hebel in drehende Bewegung versetzt. Der von beiden Armen eingeschlossene Winkel kann mittels einer Schraube (14) justiert werden. Der im Lager (15) gelagerte Teil 13a des anderen Armes (13, 13a) setzt die drehende Bewegung des einen Armes (11) bis zum Schreibstift (16) des Schreibers (17) fort. Er kann vom Registrierpapier weggeklappt werden, sodaß eine leichte Zugangsmöglichkeit zum Schreibwerk ermöglicht wird. In diesem weiteren Lager (15) ist eine Justiermöglichkeit zur Feineinstellung des Schreibstiftes (16) gegeben. Der Schreibstift (16) zeichnet mittels des Schreibers (17), der aus einem Uhrwerk mit Registrierpapier und einer Vorschubeinrichtung besteht, die gefallenen Niederschlagshöhe auf. Das Gerät ist in einem Schutzgehäuse (18) untergebracht, welches auf einem Geräteständer (19) montiert ist. Mittels eines Ablaßhahnes (20) kann das im Sammelgefäß befindliche Niederschlagswasser von Zeit zu Zeit (in der Regel monatlich) abgelassen werden. Die Maße des Gerätes, wie Durchmesser des Auffangtrichters, Durchmesser und Volumen des Sammelgefäßes, Seilraddurchmesser und Abmessungen der Kurvenscheibe, Länge der Arme des zweiarmigen Hebels sowie die Einteilung des Registrierpapieres sind aufeinander abgestimmt.

- 3 -

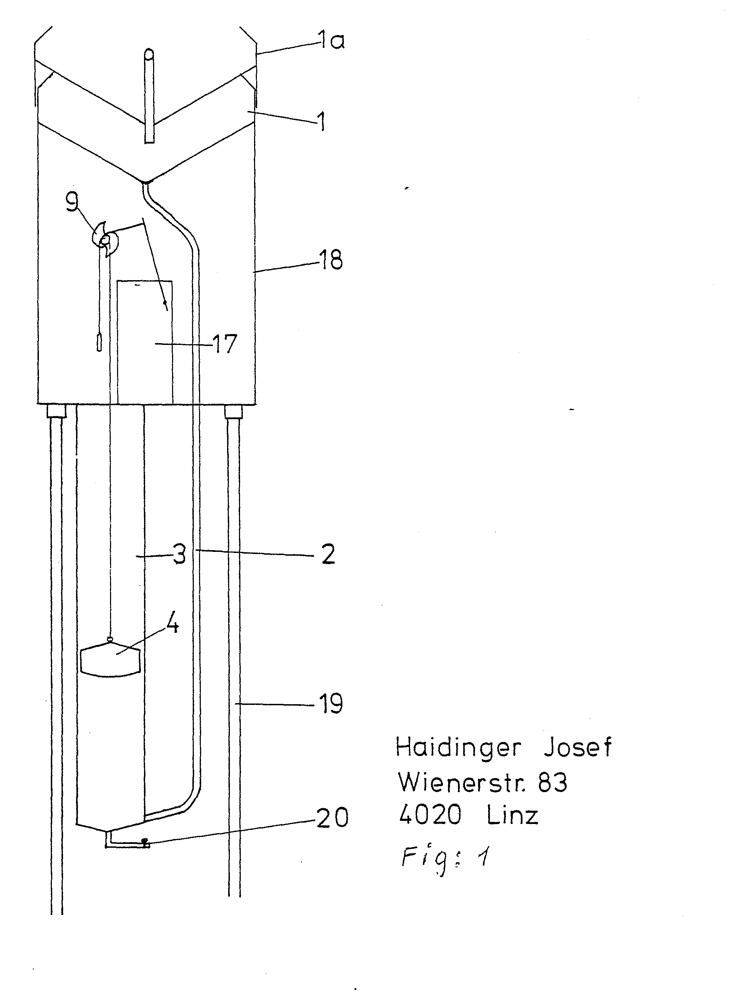

Legende zu Fig. 1 u. 2

| | |
|---|---|
| 1 | Auffangtrichter (Sommer) |
| 1a | Auffangtrichter (Winter) |
| 2 | Ablaufleitung |
| 3 | Sammelgefäß |
| 4 | Schwimmer |
| 5 | Schwimmerseil |
| 6 | Gegengewicht |
| 7 | Seilrad |
| 8 | Welle |
| 9 | Kurvenscheibe |
| 10 | Führungsstift |
| 11 | Arm |
| 12 | Lagerbock eines zweiarmigen Hebels |
| 13, 13a | Arm |
| 14 | Justierschraube |
| 15 | Lager mit Justiermöglichkeit |
| 16 | Schreibstift |
| 17 | Schreiber (Uhrwerk mit Registrierpapier und Vorschubeinrichtung) |
| 18 | Schutzgehäuse |
| 19 | Geräteständer |
| 20 | Ablaßhahn |

P A T E N T A N S P R Ü C H E :

1. Selbstregistrierendes Niederschlagsmeßgerät mit einem Sammelgefäß (3) für den Niederschlag, einem im Sammelgefäß angeordneten Schwimmer (4) und einer Übertragungseinrichtung,
   mittels derer die Lage des Schwimmers im Sammelgefäß auf
   einen Schreiber (17) übertragbar ist, dadurch gekennzeichnet,
   daß die Übertragungseinrichtung eine Kurvenscheibe (9) aufweist, deren Drehstellung der Lage des Schwimmers (4) im
   Sammelgefäß (3) entspricht und die wenigstens stückweise
   nach einer Spirale geformt ist, wobei an der Kurvenscheibe
   (9) ein Arm (11) eines schwenkbar gelagerten zweiarmigen
   Hebels anliegt, dessen anderer Arm (13, 13a) den Schreibstift (16) des Schreibers (17) trägt.

2. Niederschlagsmeßgerät nach Anspruch 1 dadurch gekennzeichnet,
   daß die beiden Arme (11, 13, 13a) des zweiarmigen Hebels
   wenigstens annähernd senkrecht aufeinander stehen, wobei die
   genaue Winkelstellung mittels einer Schraube (14) justierbar
   ist.

3. Niederschlagsmeßgerät nach Anspruch 1 oder 2, dadurch gekennzeichnet, daß die Kurvenscheibe (9) zwei Kurvenstücke aufweist,
   die nach einer archimedischen Spirale geformt sind.

Haidinger Josef
Wienerstr. 83
4020 Linz

Fig: 1

0069114

2/2

Haidinger Josef
Wienerstr. 83
4020 Linz

Fig. 2